# EUROPEAN PATENT APPLICATION

(11) **EP 2 578 336 A1**
(43) Date of publication of application: **10.04.2013**
(21) Application number: 11789953.4
(22) Date of filing: 31.05.2011
(51) Int. Cl.: B22F 1/00, B22F 3/15, B22F 9/04, C22C 1/04, C22C 14/00

(54) **TITANIUM ALLOY COMPOUND POWDER COMBINED WITH COPPER POWDER, CHROME POWDER OR IRON POWDER, TITANIUM ALLOY MATERIAL USING SAID POWDER AS RAW MATERIAL AND PRODUCTION METHOD THEREOF**

(30) Priority: 31.05.2010 JP 2010124455
(71) Applicant: Toho Titanium CO., LTD., Chigasaki-shi Kanagawa 253-8510 (JP)
(72) Inventor: KANO, Osamu, Chigasaki-shi Kanagawa 253-8510 (JP); TAKATORI, Hideo, Chigasaki-shi Kanagawa 253-8510 (JP); SUGAWARA, Satoshi, Chigasaki-shi Kanagawa 253-8510 (JP)
(74) Representative: Eisenführ, Speiser & Partner
(86) International application number: PCT/JP2011/062873
(87) International publication number: WO 2011/152553

(57) **Abstract**

A process for production of titanium alloy material has steps of hydrogenating titanium alloy material to generate hydrogenated titanium alloy; grinding, sifting and dehydrogenating the hydrogenated titanium alloy powder to generate titanium alloy powder; adding at least one of copper powder, chromium powder or iron powder to obtain titanium alloy complex powder; consolidating the titanium alloy complex powder by CIP process and subsequent HIP process, or by HIP process after filling the titanium alloy complex powder into a capsule. In addition, titanium alloy complex powder and titanium alloy material produced by the process are provided.

## Description

### Technical Field

The present invention relates to titanium alloy complex powder containing copper powder, chromium powder or iron powder, titanium alloy material consisting of the powder and a process for production thereof, and in particular, relates to titanium alloy material having superior mechanical properties and relates to a process for production thereof.

### Background Art

Titanium alloy, in particular, Ti-6Al-4V alloy has been well known as a material for airplanes. The titanium alloy is produced by a vacuum arc remelting method or an electron beam remelting method. The vacuum arc remelting method is a process in which Al-V master alloy is added to titanium material at an appropriate amount, this is pressed into briquettes, the briquettes are mutually bonded to form an electrode for remelting, the electrode for remelting is set in the vacuum arc remelting furnace, and the electrode is remelted in the vacuum to produce alloy ingots.

On the other hand, the electron beam remelting method is a process in which material for remelting consisting of titanium material and Al-V master alloy is supplied to a hearth, an electron beam is irradiated on the material to remelt it, and the melted metal is poured into a mold arranged downstream of the hearth to produce alloy ingots.

However, in the above-mentioned methods for remelting titanium alloy, since the ingot is solidified from downward to upward progressively, there is a problem of component segregation in which alloy components differ from the lower side to the upper side of the ingot. Because of the segregation, it is difficult to add an alloy component or a third addition component at high concentrations. In addition, in the electron beam remelting method, there is a problem that a low-melting point component will evaporate from the hearth and therefore there will be variation of components in the melted metal over time.

Unlike the above-mentioned remelting method, since a method in which alloy powder material mixed uniformly is pressed and molded is employed, the alloy produced with powder material is greatly advantageous from the viewpoint of segregation compared to an alloy produced by the remelting method in which an ingot is solidified from the lower side to the upper side progressively. In addition, since the alloy is not produced via a step of being melted metal, there is no problem of evaporation of a low-melting point component. In this way, the powder method process for production of titanium alloy has several advantages compared to the remelting method.

However, the titanium alloy powder used in the powder method has inferior workability and formability, as a result, there is another problem that sintering density is difficult to increase. In particular, since Ti-6Al-4V alloy has small plastic deformability, it is known that sintering density is difficult increase by an ordinary method in the powder method (See Reference 1 bellow).

Therefore, with an ordinary powder, dense titanium alloy material is produced by a sintering method such as the Cold Isostatic Press (hereinafter simply referred to as CIP) or the Hot Isostatic Press (hereinafter simply referred to as HIP) process.

However, even in the case in which sintering is performed by the CIP and HIP processes, sometimes pores remain and sintering density of titanium alloy produced is not increased. Regarding this point, for example, a technique may be used in which strength or toughness of alloy material processed by the CIP and HIP processes is improved by adding B, Mo, W, Ta, Zr, Nb or Hf to the alloy powder as a third component (See Reference 2 below).

However, an upper limit of remaining pores in titanium alloy after sintering is controlled to be not more than 50 µm in the Reference 2. A dense alloy having further fine pores or having no pores substantially is required as a material to which further higher strength is required compared to conventional titanium alloy.
Reference 1: Japanese Unexamined Patent Application Publication No. Hei 02 (1990)-050172
Reference 2: Japanese Patent Laid Open No. Hei 05 (1993)-009630

### SUMMARY OF THE INVENTION

An object of the present invention is to provide titanium alloy powder having superior quality by the powder method using titanium alloy scrap or titanium alloy ingot as a raw material, titanium alloy material, and a process for production thereof.

As a result of the inventors researching about these problems further in view of the above-mentioned circumstances, it was found that titanium alloy complex powder having uniform composition can be produced, by using the titanium alloy scrap or titanium alloy ingot as a raw material, hydrogenating it to generate hydrogenated titanium alloy, dehydrogenating it to generate titanium alloy powder, and further adding copper powder, chromium powder or iron powder, and thus the present invention has been completed.

Furthermore, they've found that an apparent density of titanium alloy complex powder having copper powder, chromium powder or iron powder can be consolidated to not less than 99% of theoretical density by CIP process and subsequent HIP process or by HIP process after filling the titanium alloy complex powder into a capsule, and thus, the present invention has been completed.

That is, titanium alloy complex powder of the present invention has titanium alloy powder, and at least one kind of metallic powder selected from copper powder, chromium powder and iron powder added to the titanium alloy powder, wherein the added amount of the metallic powder is in a range from 1 to 10 wt% in the case in which one metallic powder is added, and the added amount of the metallic powder is in a range from 1 to 20 wt% in the case in which two or more metallic powders are added.

In the present invention, it is desirable that the titanium alloy powder contain aluminum and vanadium, or contain at least one kind selected from zirconium, tin, molybdenum, iron and chromium in addition to aluminum and vanadium.

In the present invention, it is desirable that the average particle size of the copper powder, chromium powder or iron powder be in a range from 1 to 300 µm.

A process for production of titanium alloy complex powder of the present invention has steps of hydrogenating titanium alloy raw material to generate hydrogenated titanium alloy powder, dehydrogenating the hydrogenated titanium alloy powder to generate titanium alloy powder, and adding at least one of copper powder, chromium powder or iron powder.

A process for production of titanium alloy material of the present invention has steps of consolidating the titanium alloy complex powder by CIP process and subsequent HIP process, or by HIP process after filling into a capsule.

A titanium alloy material of the present invention is produced by using titanium alloy powder as a raw material which is produced by the process having steps of hydrogenating titanium alloy raw material to generate hydrogenated titanium alloy powder, dehydrogenating the hydrogenated titanium alloy powder to generate titanium alloy powder, and adding at least one of copper powder, chromium powder or iron powder.

In the present invention, it is desirable that a true density of the titanium alloy material produced by the above process be not less than 99% of theoretical density.

As mentioned above, since titanium alloy material of the present invention is produced not via remelting and solidifying, segregation of copper, chromium or iron does not occur, and as a result, although it has been conventionally regarded as difficult to disperse or solid solve by the remelting method, copper, chromium or iron can be added at high concentration. Furthermore, since reactions between titanium alloy powder and copper powder, chromium powder or iron powder occur in consolidating processes, and no special technique such as mechanical alloying or the like is necessary in the mixing step.

### BRIEF DESCRIPTION OF DRAWINGS

Fig. 1 is a flow chart diagram showing the process for production of titanium alloy material of the present invention.
Fig. 2 is a SEM photograph of Ti-6Al-4V alloy powder produced by the hydrogenating and dehydrogenating processes.
Fig. 3 is a SEM photograph of titanium alloy complex powder in which copper powder is added to titanium alloy powder.
Fig. 4 is a result of EPMA analysis of 5%Cu containing Ti-6Al-4V alloy material in width direction.

### BEST MODE FOR CARRYING OUT THE INVENTION

Preferable embodiments of the present invention are explained below with reference to the drawings.

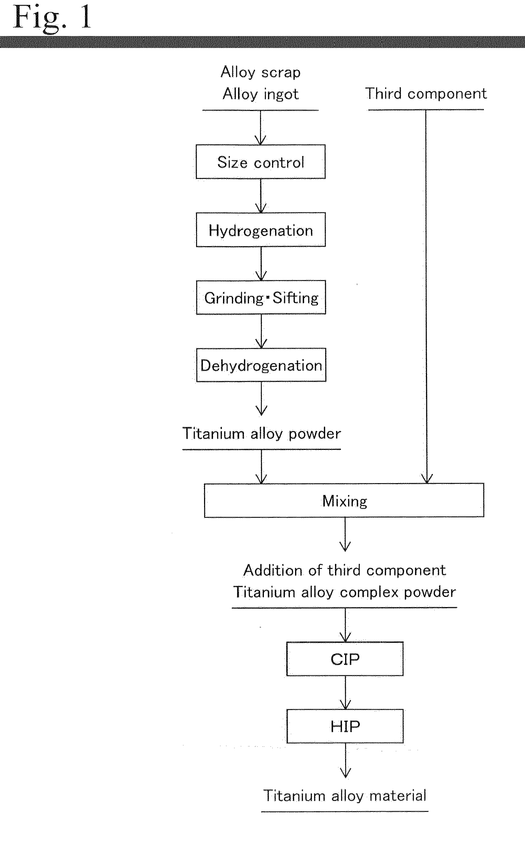

Fig. 1 shows a desirable embodiment for production of titanium alloy material of the present invention. As a raw material of titanium alloy, a mixture consisting of a master alloy powder having desired components produced in another process and pure titanium powder can be used; however, since the master alloy powder is expensive, it is desirable to use an alloy scrap or titanium alloy ingot originally having desired components such as titanium alloy chips, titanium alloy forged chips, edge material of titanium alloy rods or the like as the raw material in the present invention from the viewpoint of cost reduction.

It is desirable that lengths or dimensions of these titanium alloy scraps or titanium alloy ingots (hereinafter simply referred to as "titanium alloy raw material") be controlled to a predetermined size beforehand. For example, it is desirable to cut the material up at not more than 100 mm beforehand in the case of alloy chips. By cutting at the above-mentioned length, subsequent hydrogenating process can be efficiently promoted. In addition, in the case of block shaped alloy scrap such as the forged chips, there is no difficulty as long as it has a size by beforehand processing so that it can be placed into a hydrogenating furnace. In the case in which the alloy raw material is titanium alloy ingot, it is desirable to treat it so as to be cut chips.

The titanium alloy raw material treated and controlled as mentioned above, is brought into the hydrogenating process under a hydrogen atmosphere. The hydrogenating process is desirably performed in a temperature range from 500 to 650 °C. Since hydrogenating process reaction of alloy raw material is an exothermic reaction, any heating operation by a heating furnace is not necessary accompanied by promotion of hydrogenating reaction, and thus hydrogenating reaction can be promoted automatically.

The titanium alloy raw material which is hydrogenation treated (hereinafter simply referred to as "hydrogenated titanium alloy") is then cooled to room temperature, and it is desirably ground and sifted until hydrogenated titanium powder has a predetermined particle size under an inert atmosphere such as argon gas or the like.

By performing grinding and sifting processes of the hydrogenated titanium alloy powder, subsequent consolidating process or titanium alloy complex powder by CIP process and subsequent HIP process or by HIP process after filling titanium alloy complex powder into a capsule, can be effectively promoted.

Next, hydrogenated titanium alloy powder that is ground and sifted is desirably heated until it reaches a high temperature range in an atmosphere held at reduced pressure. The temperature of dehydrogenating process is desirably performed in a range from 500 to 800 °C. Since the dehydrogenation reaction is an endothermic reaction, in contrast to the above-mentioned hydrogenation reaction, heating operation is necessary until hydrogen is completely generated from hydrogenated titanium alloy powder. By the operation, titanium alloy powder of the present invention can be obtained.

It is desirable that titanium alloy powder of the present invention be controlled in a range from 1 to 300 µm.

Titanium alloy powder obtained by the above-mentioned dehydrogenating process is sometimes sintered together, and in this case, it is desirable that the grinding and sifting processes be performed again.

After dehydrogenating process, by adding copper powder, chromium powder or iron powder which is a third component used in the present invention to the titanium alloy powder ground and sifted, the titanium alloy complex powder of the present invention can be obtained. It is desirable that the titanium alloy complex powder of which grinding and sifting processes be performed and copper powder, chromium powder or iron powder be added controlled in a range from 1 to 300 µm.

In the present invention, it is desirable that the consolidating process be performed by combining CIP and HIP appropriately.

For example, it is desirable that titanium alloy complex powder obtained in the above-mentioned method be filled in a CIP rubber, treated at 100 to 200 MPa, then filled in a HIP capsule, and HIP treated at a temperature not more than β transformation point at 50 to 200 MPa for 1 to 5 hours. After such CIP process and subsequent HIP process, consolidated titanium alloy material can be obtained.

Alternatively, it is desirable that titanium alloy complex powder obtained in the above-mentioned method be filled in a HIP capsule and HIP treated at a temperature not higher than β transformation point at pressure from 50 to 200 MPa for 1 to 5 hours without CIP process. Consolidated titanium alloy material can also be obtained by only the HIP process.

Next, function and effect by adding copper powder, chromium powder or iron powder to titanium alloy powder is explained. Function and effect by adding copper powder, chromium powder or iron powder

It is expected that mechanical properties, formability and sintering property of material are improved by adding copper powder, chromium powder or iron powder to titanium alloy powder.

In the present invention, it is desirable that copper powder, chromium powder or iron powder be added to titanium alloy powder as a third component. It is desirable that the ratio of adding be 1 to 10% of titanium alloy powder weight in the case in which one kind of these metallic powders is added. In addition, it is desirable that the total ratio of adding be 1 to 20 % of titanium alloy powder weight in the case in which two kinds or more of these metallic powders are added.

In the case in which iron or chromium is originally contained in titanium alloy powder, it is desirable to add so that the sum of the content of iron or chromium originally contained in titanium alloy and a content of iron or chromium added later is in a range from 1 to 10 %.

In the case in which addition ratio of copper powder, chromium powder or iron powder which is the third component and is alone added to titanium alloy powder is not more than 1 %, effect of the consolidation cannot be exhibited sufficiently in the consolidating process in the sintering process. On the other hand, in the case in which addition ratio of copper powder, chromium powder or iron powder is more than 10 %, strength of titanium alloy is undesirably deteriorated.

In the case in which plural third components are added to titanium alloy powder, a range of 1 to 20 % is desirable for a similar reason.

In the case in which copper, chromium or iron is originally contained in titanium alloy, it is desirable to add so that sum of the content of copper, chromium or iron originally contained in titanium alloy and a content of the metals added later is in a range from 1 to 20 %.

It is desirable that copper powder, chromium powder or iron powder used in the present invention has a purity of 2N5 to 4N5.

Since titanium alloy powder has low formability and forming by a simple mold pressing or the like is difficult, CIP process is required. A compact which is CIP treated is sensitive to CIP pressure, strength is decreased by a pressing force less than 100 MPa, and appropriate compact cannot be obtained.

However, strength of a compact is increased if copper powder, chromium powder or iron powder is added to titanium alloy powder. As a result, shape of the compact can be maintained even by a pressing force not greater than 100 MPa. It is considered that natural low deformability of titanium alloy powder is improved by adding copper powder, chromium powder or iron powder.

Deformability of titanium alloy powder to which copper powder, chromium powder or iron powder is added is improved, and as a result, sintering property is also superior.

Furthermore, by performing CIP process and subsequent HIP process, or by filling into a capsule and performing HIP process, to titanium alloy powder to which copper powder, chromium powder or iron powder is added, a sintered body not having voids and having density ratio not less than 99 % of theoretical density can be obtained. It is considered that copper powder, chromium powder or iron powder functions as a sintering promoting agent.

Furthermore, by regulating addition ratio of copper powder, chromium powder or iron powder in the above range, and by performing CIP process and subsequent HIP process, or by filling into a capsule and performing HIP process, mechanical properties of a titanium alloy material which is treated by consolidating can be efficiently maintained. This is due to a solid solute enhancement effect by addition of copper powder, chromium powder or iron powder.

As the copper powder, chromium powder or iron powder added to titanium alloy powder, commercially available powder sample can be used. In the case in which the powder sample is difficult to prepare, powder that is obtained by grinding a block sample and then sifting can be used.

Titanium alloy powder to which copper powder, chromium powder or iron powder is added is consolidated by performing CLIP process and subsequent HIP process, or by performing HIP process after filling titanium alloy powder into a capsule.

For example, in the case of an alloy in which copper powder, chromium powder or iron powder is added to Ti-6Al-4V alloy, it is desirable to perform CIP process at 900 °C which is not higher than β transformation point and at hydrostatic pressure of 100 to 200 MPa and then to perform HIP process at a hydrostatic pressure of 100 MPa for 1 hour.

Furthermore, for example, in the case of an alloy in which copper powder, chromium powder or iron powder is added to Ti-6Al-4V alloy, it is desirable to perform HIP process at 900 °C which is not higher than the β transformation point and at a hydrostatic pressure of 100 MPa for 1 hour after filling the powders into the capsule. Titanium alloy material having a density not less than 99 % can be obtained by such consolidating process.

Copper powder, chromium powder or iron powder added in titanium alloy powder is dispersed in titanium of alloy material matrix during a consolidating process, and as a result, alloy in which atoms of copper, chromium or iron are uniformly solid solved in titanium alloy can be produced.

By the present invention, copper, chromium or iron that is solid solved in titanium alloy can be solid solved at high ratio compared to a conventional remelting method, that is, 1 to 10 wt% in single powder addition and 1 to 20 wt% in plural powder addition. As a result, mechanical properties of titanium alloy material can be effectively controlled.

Furthermore, in the present invention, titanium alloy such as Ti-6Al-4V alloy, Ti-3Al-2.5V alloy, Ti-6Al-2Sn-4Zr-6Mo alloy, Ti-6Al-6V-2Sn alloy, Ti-10V-2Fe-3Al alloy (10-2-3), Ti-5Al-4V-0.6Mo-0.4Fe alloy (Timetal 54M), Ti-4.5Al-3V-2Fe-2Mo alloy (SP700), Ti-15V-3Cr-3Al-3Sn alloy (15-3-3-3), Ti-4Al-2.5V-1.5Fe alloy (ATI425), Ti-5Al-5V-5Mo-3Cr alloy (Ti-5553) can be used as the above mentioned raw material of titanium alloy powder.

Mechanical properties of titanium alloy material containing copper, chromium or iron and being consolidated by the above-mentioned method can be further controlled by subsequent processing such as rolling, extrusion or drawing and heat process.

### EXAMPLES

Practical examples of production of titanium alloy powder are explained below.

### Example 1

Scrap cut chips of Ti- 6Al-4V alloy were cut into chips having lengths not greater than 10 mm. The chips were inserted into a container and the container was set in a furnace. After vacuum evacuation inside the furnace, heating was started, hydrogen was induced into the furnace after the temperature inside the furnace reached 300 °C, and heating was continued until 650 °C while maintaining the inside of the furnace in a slightly pressurized condition by hydrogen. During this process, since Ti-6Al-4V alloy scrap chips and hydrogen are reacted and temperature inside the furnace is increased, heater output was set at 0, and the condition was maintained as it was until the reaction was completed.

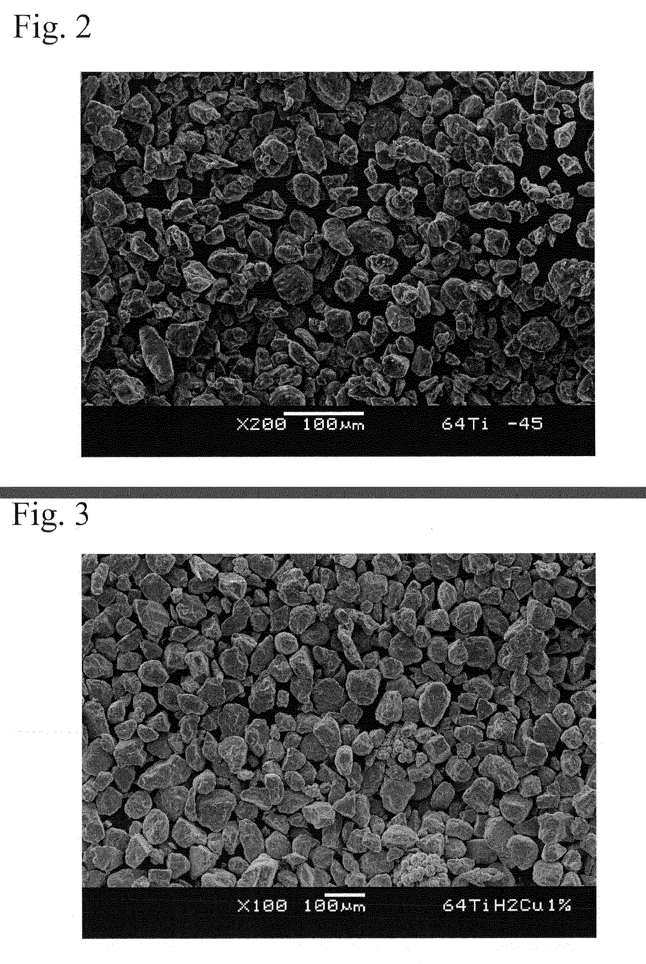

After the reaction was completed, the furnace was allowed to cool and the material was taken out. Confirmation was by X-ray diffraction, since only peaks of hydrogenated titanium were detected, and it was confirmed that all the material was converted into hydrogenate. Grinding this hydrogenate under an argon gas atmosphere and sifting by a sifter of 300 mesh yielded hydrogenated titanium alloy powder having a particle size not greater than 48 µm. This hydrogenated titanium alloy powder was inserted in a container made of titanium, and dehydrogenation process was performed in a vacuum heating furnace. Starting heating after vacuum evacuation, dehydrogenation reaction in which hydrogen gas was separated occurred at about 300 °C. Heating was continued to increase the temperature up to 500 °C, and then 600 °C, and dehydrogenation was promoted. Since the dehydrogenation reaction is an endothermic reaction, it is important to maintain temperature inside the furnace at a constant level to perform dehydrogenation efficiently. When the temperature was held at 650 °C, for 1 hour, the degree of vacuum was recovered. Since a vacuum degree of 1 x 10⁻³ mbar was obtained, heating was stopped, and it was cooled. It was confirmed that the obtained powder was Ti-6Al-4V titanium alloy powder by X-ray diffraction. Furthermore, since part of the powder was aggregated, the aggregation was crushed by a crushing machine to obtain titanium alloy powder of not more than 300 µm. Fig. 2 shows an SEM photograph of titanium alloy powder obtained as above. It was confirmed that alloy powder having relatively even particle size can be obtained by the method of the present invention in the photograph.

### Example 2

Electrolytic copper powder (particle size: not greater than 45 µm, produced by JX Nippon Mining & Metals Corporation) was added to titanium alloy powder of Example 1 at 5 wt% of titanium alloy powder, and they were mixed with a V-type mixing machine. Fig. 3 shows an SEM photograph of titanium alloy complex powder obtained as above. It was confirmed that titanium alloy complex powder having relatively even particle size can be obtained by the method of the present invention in the photograph. Maximal particle size of obtained mixture powder was 300 µm, and average particle size was 60 µm.

### Example 3

Cu-added titanium alloy powder of Example 2 was filled in a CIP rubber, and CIP treated at 100 MPa. Density of the CIP compact was 65 %. It has strength sufficient to be self-supported, and it was never broken during handling.

The CIP compact was encapsulated in a soft steel capsule and HIP treated. Conditions of HIP were 900 °C, 100MPa and 1 hr. After HIP process, titanium material was taken out and its density was measured, and it was not less than 99%. Density mentioned here means the ratio of apparent density against the theoretical density.

### Example 3-2

Cu-added titanium alloy powder of Example 2 was encapsulated in a soft steel capsule and HIP treated. Conditions of HIP were 900 °C, 100 MPa and 1 hr. After HIP process, titanium alloy material was taken out and its density was measured, and it was not less than 99%. Density mentioned here means the ratio of apparent density against the theoretical density.

### Example 4

Tensile test and hardness measuring test of titanium alloy material of Example 3 were performed. 0.2 % proof stress was 1200 MPa, tensile strength was 1300 MPa, and elongation was 10%. It was confirmed that both 0.2 % proof stress and tensile strength were not less than 20 % stronger than Cu-not added Ti-6Al-4V alloy annealed material produced by the remelting method. The Vickers hardness was 465.

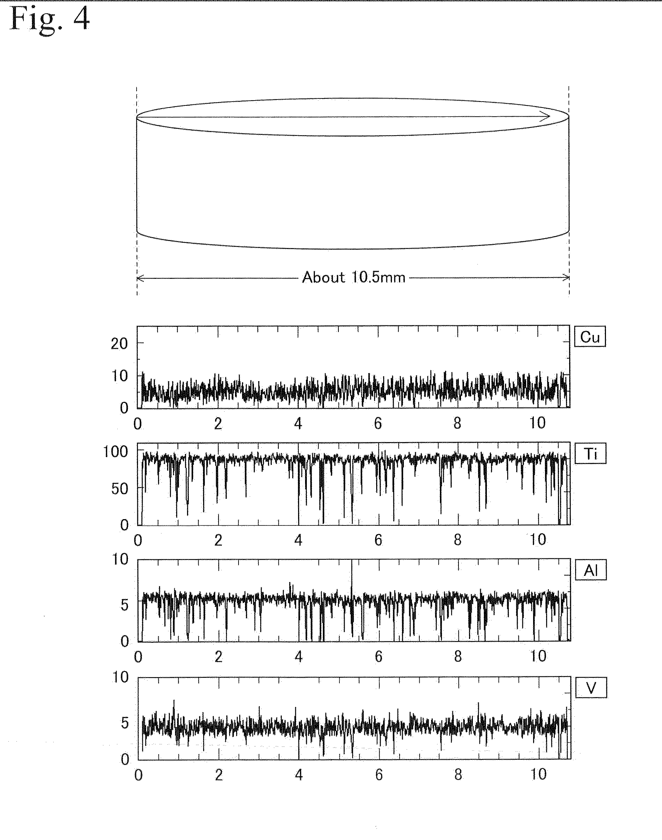

Titanium alloy material of Example 3 was analyzed by EPMA along a range of 10.5 mm to confirm variation of each component of Ti, Al, V and Cu, and the results are shown in Fig. 4. It is confirmed that concentration of Cu is almost uniform around 5 % along the analyzed range of 10.5 mm.

### Example 5

Chromium powder was added to titanium alloy powder of Example 1 at 5 wt% of titanium alloy powder to obtain Cr containing titanium alloy powder. Cr powder was prepared by crushing electrolytic chromium powder produced by Japan Metals & Chemicals Co., Ltd., and sifting it by using a sifter of 50 mesh. Cr containing titanium alloy material was obtained by CIP process and subsequent HIP process in a similar conditions of Example 3. Density of the material was not less than 99 %.

### Example 5-2

Chromium added titanium alloy powder of Example 5 was encapsulated in a soft steel capsule and HIP process was performed. HIP condition was 900 °C, 100 MPa, and 1 hour. After HIP process, titanium alloy material was taken out and the density was measured, and the density was not less than 99 %.

### Example 6

Iron powder was added to titanium alloy powder of Example 1 at 5 wt% of titanium alloy powder to obtain Fe containing titanium alloy powder. Fe powder was commercially available atomized iron powder, and its average particle diameter was 4 µm. Fe containing titanium alloy material was obtained by CIP process and subsequent HIP process in a similar conditions of Example 3. Density of the material was not less than 99 %.

### Example 6-2

Iron added titanium alloy powder of Example 6 was encapsulated in a soft steel capsule and HIP process was performed. HIP conditions were 900 °C, 100 MPa, and 1 hour. After HIP process, titanium alloy material was taken out and the density was measured, and the density was not less than 99 %.

### Example 7

Cu powder and Fe powder were added to titanium alloy powder of Example 1 at 5 wt% (each powder), 10 wt% (total powders of Cu + Fe) of titanium alloy powder to obtain Cu-Fe containing titanium alloy powder. Cu powder and Fe powder were the same powders as in Examples 2 and 6 respectively. Cu-Fe containing titanium alloy material was obtained by CIP process and subsequent HIP process in the similar conditions of Example 3. Density of the material was not less than 99 %.

### Example 7-2

Cu powder and Fe powder added titanium alloy powder of Example 7 was encapsulated in a soft steel capsule and HIP process was performed. HIP conditions were 900 °C, 100 MPa, and 1 hour. After HIP process, titanium alloy material was taken out and the density was measured, and the density was not less than 99 %.

### Example 8

Cu powder and Cr powder were added to titanium alloy powder of Example 1 at 5 wt% (each powder), 10 wt% (total powders of Cu + Cr) of titanium alloy powder to obtain Cu-Cr containing titanium alloy powder. Cu powder and Cr powder were the same powders as in Examples 2 and 5 respectively. Cu-Cr containing titanium alloy material was obtained by CIP process and subsequent HIP process in the similar conditions of Example 3. Density of the material was not less than 99 %.

### Example 8-2

Cu powder and Cr powder added titanium alloy powder of Example 8 was encapsulated in a soft steel capsule and HIP process was performed. HIP condition was 900 °C, 100 MPa, and 1 hour. After HIP process, titanium alloy material was taken out and the density was measured, and the density was not less than 99 %.

### Example 9

Cr powder and Fe powder were added to titanium alloy powder of Example 1 at 5 wt% (each powder), 10 wt% (total powders of Cr + Fe) of titanium alloy powder to obtain Cr-Fe containing titanium alloy powder. Cr powder and Fe powder were the same powders as in Examples 5 and 6 respectively. Cr-Fe containing titanium alloy material was obtained by CIP process and subsequent HIP process in the similar conditions of Example 3. Density of the material was not less than 99 %.

### Example 9-2

Cr powder and Fe powder added titanium alloy powder of Example 9 was encapsulated in a soft steel capsule and HIP process was performed. HIP conditions were 900 °C, 100 MPa, and 1 hour. After HIP process, titanium alloy material was taken out and the density was measured, and the density was not less than 99 %.

### Example 10

Cu powder, Cr powder and Fe powder were added to titanium alloy powder of Example 1 at 4 wt% (each powder), 12 wt% (total powders of Cu, + Cr + Fe) of titanium alloy powder to obtain Cu-Cr-Fe containing titanium alloy powder. Cu powder, Cr powder and Fe powder were the same powders as in Examples 2, 5 and 6 respectively. Cu-Cr-Fe containing titanium alloy material was obtained by CLIP process and subsequent HIP process in the similar conditions of Example 3. Density of the material was not less than 99 %.

### Example 10-2

Cu powder, Cr powder and Fe powder added titanium alloy powder of Example 10 was encapsulated in a soft steel capsule and HIP process was performed. HIP conditions was 900 °C, 100 MPa, and 1 hour. After HIP process, titanium alloy material was taken out and the density was measured, and the density was not less than 99 %.

### Example 11

Cu powder was each added at 1 %, 3 %, 8 % and 10 % in a way completely similar to that of Example 2 to obtain four samples of Cu containing titanium alloy powder. Cu containing titanium alloy material was obtained by CIP process and subsequent HIP process in similar conditions of Example 3. Densities of all the materials were not less than 99 %. Vickers hardnesses thereof were measured, and the results are shown in Table 1. In Table 1, the result of 5 wt% containing alloy of Example 4 is also shown.

### Example 11-2

Each of Cu powder added titanium alloy powder samples in which Cu powder is each added so as to be 1%, 3 %, 8 % and 10 % Cu powder content shown in Example 11, was encapsulated in a soft steel capsule and HIP process was performed. HIP condition was 900 °C, 100 MPa, and 1 hour. After HIP process, titanium alloy material was taken out and the density was measured, and the density was not less than 99 %. Vickers hardnesses thereof were measured, and the results are shown in Table 2. In Table 2, the result of 5 wt% containing alloy of Example 3-2 is also shown.

**Table 1**

| | | | | | |
|---|---|---|---|---|---|
| Cu content | 1 % | 3 % | 5 % | 8 % | 10% |
| Vickers hardness | 350 | 380 | 465 | 480 | 435 |

**Table 2**

| | | | | | |
|---|---|---|---|---|---|
| Cu content | 1 % | 3 % | 5 % | 8% | 10% |
| Vickers hardness | 351 | 375 | 463 | 482 | 440 |

### Comparative Example 1

Titanium alloy powder the as same as in Example 1 was CIP treated in a manner similar to that of Example 3 without adding Cu, Cr and Fe powder. In the removal of CIP rubber, a CIP compact does not have sufficient strength, and a corner part was broken right after removal. Although the part was broken, an attempt was made to handle the CIP compact so as to be encapsulated into a HIP container. Then, the compact broke at a central part into two pieces, and HIP process could not be performed. Next, CIP process was performed similarly at 200 MPa of hydrostatic pressure, and the compact could be completed. The compact was carefully handled to be encapsulated in a HIP container, and HIP was performed in conditions similar to that of Example 3. The compact was taken out of the HIP container and density was measured, and the density was 98 %.

### Comparative Example 2

In conditions similar to those of Example 11, two samples in which added ratio of copper powder to titanium alloy powder was 0.5 % and 11% were made, their density ratio of sintered bodies after sintering were measured, and the results are shown in Table 3. Density ratio of sintered body obtained in the case in which added ratio of copper powder to titanium alloy powder was 0.5 %, was 98.3 %. In addition, density ratio of sintered body obtained in the case in which added ratio of copper powder to titanium alloy powder was 11 %, was 98.2 %. As explained so far, in the case in which added ratio of copper powder to titanium alloy powder is in a range from 1 to 10 %, density ratio of obtained sintered body is not less than 99 % which is a good result. However, in the case in which added ratio of copper powder to titanium alloy powder is less than 1 % and more than 10%, it is confirmed that the density ratio of a sintered body may be deteriorated to less than 99 %.

**Table 3**

| | | | | | | |
|---|---|---|---|---|---|---|
| wt% | 0.5 | 1 | 3 | 8 | 10 | 11 |
| Density ratio % | 98.3 | 99.2 | 99.1 | 99.3 | 99.2 | 98.2 |

The present invention provides titanium alloy complex powder, consolidated titanium alloy material and process for production thereof, using titanium alloy scrap or ingot as a raw material and by a hydrogenation and dehydrogenation method.

## Claims

1. Titanium alloy complex powder comprising:
titanium alloy powder, and
at least one kind of metallic powder selected from copper powder, chromium powder and iron powder added to the titanium alloy powder,
wherein the amount of the metallic powder added ranges from 1 to 10 wt% in case that one metallic powder is added, and the amount of the metallic powder added ranges from 1 to 20 wt% in case that two or more metallic powders are added.

2. The titanium alloy complex powder according to claim 1, wherein the titanium alloy powder contains aluminum and vanadium, or contains at least one kind selected from zirconium, tin, molybdenum, iron and chromium in addition to aluminum and vanadium.

3. The titanium alloy complex powder according to claim 1, wherein the average particle size of the copper powder, chromium powder or iron powder ranges from 1 to 300 µm.

4. A process for production of titanium alloy complex powder, comprising steps of:
hydrogenating titanium alloy as a raw material to generate hydrogenated titanium alloy powder,
dehydrogenating the hydrogenated titanium alloy powder to generate titanium alloy powder, and
adding at least one of copper powder, chromium powder and iron powder.

5. A process for production of titanium alloy material, comprising steps of:
consolidating the titanium alloy complex powder according to one of claims 1 to 3 by CIP process and subsequent HIP process, or by HIP process after filling into a capsule.

6. A titanium alloy material produced by the process according to claim 5.

7. The titanium alloy material according to claim 6, wherein the density of the titanium alloy material is not less than 99% to the theoretical one.

## Amended claims

Statement under Art. 19.1 PCT
In claim 1, "titanium alloy powder" is limited to "titanium alloy powder containing aluminum and vanadium, or containing at least one kind selected from zirconium, tin, molybdenum, iron and chromium in addition to aluminum and vanadium", and furthermore, claim 1 is limited to "titanium alloy powder is made by hydrogenating titanium alloy raw material to generate hydrogenated titanium alloy powder and by dehydrogenating this hydrogenated titanium alloy powder". Furthermore, claim 2 is cancelled.

In addition, in claims 1 and 4, "add" is limited as "mix" which means a physically mixed condition, not chemically bonded.

Each of the cited reference discloses mixture of titanium alloy powder and ceramic powder. However, the references do not disclose mixture of titanium alloy powder made by hydrogenating titanium alloy raw material powder containing aluminum and vanadium, or containing at least one kind selected from zirconium, tin, molybdenum, iron and chromium in addition to aluminum and vanadium to generate hydrogenated titanium alloy powder and by dehydrogenating this hydrogenated titanium alloy powder and ceramic powder.
